# EUROPÄISCHE PATENTSCHRIFT

(11) **EP 2 159 087 B1**
(45) Veröffentlichungstag und Bekanntmachung des Hinweises auf die Patenterteilung: **24.04.2013**
(21) Anmeldenummer: 09166946.5
(22) Anmeldetag: 31.07.2009
(51) Int. Cl.: B60H 1/34, F24F 13/06

(54) **Komfortdüse**
Comfort nozzle
Buse de confort

(30) Priorität: 26.08.2008 DE 102008039699
(43) Veröffentlichungstag der Anmeldung: 03.03.2010
(73) Patentinhaber: Behr GmbH & Co. KG, 70469 Stuttgart (DE)
(72) Erfinder: Burr, Reinhold, 89518, Heidenheim (DE); Jochmann, Paul, 70191, Stuttgart (DE); Lang, Matthias, 70469, Stuttgart (DE)
(74) Vertreter: Grauel, Andreas

(56) Entgegenhaltungen:
- WO-A-02/09892
- DE-A1- 3 435 602
- DE-A1- 3 736 448

## Beschreibung

Die Erfindung betrifft eine Komfortdüse gemäß dem Oberbegriff des Anspruches 1.

Um Luft einem Fahrzeuginnenraum zuzuführen, sind üblicherweise eine Mehrzahl von einzelnen Düsen vorgesehen. So sind im Frontbereich eines Fahrzeuginnenraums üblicherweise Seiten- und Mitteldüsen sowie Defrost- und Fußraumdüsen angeordnet. Für die Belüftung und ggf. Temperierung des Fondbereichs sind vielfach weitere Düsen in Gestalt von Belüftungs- und Fußraumdüsen vorgesehen. Als Düsen sind unter anderem sogenannte Komfortdüsen bekannt, bei denen ein Luftstrom im Inneren der Düse durch entsprechende Leitschaufeln, Leitflächen o.ä. mit einem Drall versetzt wird, so dass sich der Luftstrahl beim Ausströmen stark aufweitet und im Wesentlichen diffus austritt. Hierbei kann die Düse auch derart ausgestaltet sein, dass eine Wahl zwischen diffusem Ausströmen und gerichtetem Ausströmen (Spotstrahl) möglich ist, wobei in der Regel verschiedene Stellungen möglich sind, oder eine stufenlose Verstellbarkeit zwischen maximal diffusem Ausströmen, d.h. maximal aufgeweitetem Luftstrahl, und gerichtetem Ausströmen vorgesehen ist. Derartige Komfortdüsen sind beispielsweise in der WO 2005 / 016673 A1 (starre Leitflächen), der DE 10 2005 054 295.6 (starre Leitschaufeln) oder der DE 10 2006 053 836.6 (bewegliche Leitschaufeln) beschrieben. Die Leitflächen bzw. -schaufeln bilden hierbei Drallerzeuger, welche einen Luftstrahl verwirbeln. Derartige Komfortdüsen sind im Frontbereich eines Fahrzeugs als Mittel- oder Seitendüsen angeordnet. Die Einstellung derartiger Komfortdüsen erfolgt üblicherweise durch eine Drehbewegung an einem Bedienelement oder einen entsprechend ausgebildeten, vorstehenden Bereich der Dralldüse. Andere Systeme nutzen auch verschwenkbare Lamellen, welche in paralleler Ausrichtung einen gerichteten Luftstrahl und in sich öffnender Anordnung einen aufgeweiteten Luftstrahl erzeugen. Der austretende Luftstrahl kann bei derartigen Komfortdüsen vollständig gerichtet (spot), maximal aufgeweitet (diffus) oder teilweise gerichtet und teilweise aufgeweitet (spot/diffus) eingestellt werden.

Aus der DE 10 2005 029 340 B3 ist eine Luftauslassdüse bekannt, die einen in die Luftauslassebene mündenden Luftkanal und eine in der Luftauslassebene angeordnete Prallplatte zur Strahlaufweitung aufweist. Hierbei ist die Prallplatte durch zwei beweglich gelagerte Lamellen gebildet, die in Flucht mit der Luftauslassebene verlaufend angeordnet sind, wobei die Lamellen zwischen einer Diffusstellung und einer Spotstellung bewegbar sind. In der Diffusstellung bilden die Lamellen unmittelbar aneinander liegend eine geschlossene Prallplatte aus, die die Druckverhältnisse am Ausgang der Luftdüse entsprechend dem Totwassereffekt so beeinflussen, dass der Luftstrahl aufgeweitet wird.

Aus der DE 10 2006 050 999 A1 ist eine Komfortdüse mit einem einzigen zuführenden Luftkanal bekannt, wobei im Luftkanal verschwenkbare Leitflächen angeordnet sind, welche den durchströmenden Luftstrahl bei verschwenkter Stellung mit einem Drall beaufschlagen.

Aus der gattungsgemäßen WO 02/09892 ist eine Luftauslassdüse bekannt, die den nächstliegenden Stand der Technik darstellt.

Diese bekannten Komfortdüsen lassen jedoch noch Wünsche offen.

Es ist Aufgabe der Erfindung, eine verbesserte Komfortdüse zur Verfügung zu stellen.

Diese Aufgabe wird gelöst durch eine Komfortdüse mit den Merkmalen des Anspruches 1. Vorteilhafte Ausgestaltungen sind Gegenstand der Unteransprüche.

Die Erfindung betrifft eine Komfortdüse mit einstellbarer Luftstrahlaufweitung, aufweisend einen Drallerzeugungsbereich, wobei dem Drallerzeugungsbereich nachfolgend angeordnet ein konvergent-divergenter Ablösungsbereich mit einer Abrisskante angeordnet ist, und die Abrisskante beabstandet vom Austrittsquerschnitt der Komfortdüse ist. Hierbei wird bei Bedarf im Drallerzeugungsbereich die von einem zuführenden Luftkanal kommende Luft mit einem Drall behaftet, bspw, mit Hilfe von drehbar gelagerten Leitflächen, welche zur Drallbeaufschlagung schräggestellt werden. In Folge des Dralls kommt der Luftstrom hinter der Abrisskante wieder zum Anliegen an den Innenumfang der Komfortdüse, so dass sich der Luftstrahl weiter aufweiten kann. Im Spotbetrieb durchströmt die Luft den Drallerzeugungsbereich ohne, dass sie mit einem Drall beaufschlagt wird, d.h. im Falle von drehbar gelagerten Leitflächen sind diese gerade ausgerichtet. Der Luftstrahl reißt an der Abrisskante ab und es bildet sich ein Spotstrahl mit großer Eindringtiefe in den Fahrzeuginnenraum aus. Neben einem reinen Spot- oder Diffusbetrieb sind durch den Drallerzeugungsbereich auch beliebige Zwischenformen möglich, insbesondere bevorzugt mit stufenloser Verstellbarkeit zwischen Spot- und Diffusstellung. Zudem kann auch die Strahlaufweitung stufenlos eingestellt werden. Die erfindungsgemäße Komfortdüsen mit nachgeordnetem Ablösungsbereich ermöglicht insbesondere auch eine effektive Durchmischung des Luftstroms im Diffusbetrieb bei minimalem Druckverlust.

Insbesondere lässt sich durch den Drallerzeugungsbereich mit einem nachgeordnetem Ablösungsbereich eine Komfortdüse realisieren, die lediglich einen Luftkanal benötigt, der im Wesentlichen im gesamten Strömungsquerschnitt durchströmt wird. Eine Luftverteilung auf zwei oder mehr Teilluftkanäle ist nicht erforderlich, d.h. es ergeben sich Bauraumvarteile in Bezug auf Komfortdüsen mit mehreren unterschiedlichen Teilluftkanälen für den Spot- und Diffusbetrieb. Durch den vollständig nutzbaren Strömungsquerschnitt ergeben sich geringere Druckverluste und insbesondere auch eine verbesserte Akustik.

Bevorzugt ist die Abrisskante in einer Ebene, die senkrecht zur Mittellängsachse der Komfortdüse ist, umlaufend angeordnet. Insbesondere bevorzugt weist die Komfortdüse zumindest im Ablösungsbereich, bevorzugt auch im Drallerzeugungsbereich, einen kreisförmigen Querschnitt auf, jedoch sind im Prinzip auch andere Querschnitte, wie insbesondere elliptische Querschnitte, möglich.

Insbesondere bevorzugt weist die Abrisskante bei einem Längsschnitt durch die Komfortdüse einen rechten Winkel auf, jedoch sind gegebenenfalls auch spitzere Winkel möglich.

Vorzugsweise ist ein hohlzylindrischer Bereich mit einem minimalen Innendurchmesser vor der Abrisskante angeordnet.

Insbesondere bevorzugt verringert sich der Innendurchmesser der Komfortdüse in einem Bereich ausgehend vom Drallerzeugungsbereich bis zu einem Bereich mit minimalem Innendurchmesser kreis-, ellipsen- oder hyperbelsegmentartig. Dadurch wird die Luftströmung beschleunigt.

Der Innendurchmesser der Komfortdüse ist vorzugsweise in einem Bereich ausgehend vom Bereich mit minimalem Innendurchmesser zuerst konstant, und vergrößert sich in normaler Luftströmungsrichtung der Komfortdüse anschließend nach einer eine Abrisskante bildenden Stufe. Bevorzugt vergrößert sich der Innendurchmesser nach der Stufe linear, kreis-, ellipsen- oder hyperbetsegmentartig. Die divergente Ausgestaltung in diesem Bereich des Ablösungsbereichs verzögert die Luftströmung axial, vergrößert lokal die Drallzahl und begünstigt somit das Aufplatzen des Wirbels. Dadurch kann eine stabile und ausgedehnte Rezirkulationszone mit sehr guten Mischeigenschaften und gleichzeitig niedriger Drallzahl erzeugt werden.

Der Eintritts-Innendurchmesser entspricht bevorzugt dem Austrittsquerschnitt-Innendurchmesser des Drallerzeugungsbereichs.

Die Länge vom Eintrittsquerschnitt bis zum Querschnitt mit dem kleinsten Innendurchmesser ist vorzugsweise gleich der Differenz des Eintritts-Innendurchmessers und des kleinsten Innendurchmessers ist, oder liegt zumindest in einem Bereich der Differenz +/- 30% der Differenz, insbesondere bevorzugt +/-15% der Differenz.

Der Innendurchmesser im Austrittsquerschnitt ist bevorzugt größer als der kleinste Innendurchmesser, Insbesondere bevorzugt ist der Innendurchmesser im Austrittsquerschnitt mindestens 20%, insbesondere mindestens 50% größer als der kleinste Innendurchmesser.

Bevorzugt ist der Innendurchmesser im Eintrittsquerschnitt gleich dem Innendurchmesser im Austrittsquerschnitt.

Die Abrisskante bildet vorzugsweise eine Stufe, welche den kleinsten Innendurchmesser um mindestens 2%, insbesondere um mindestens 5%, insbesondere um mindestens 10%, erweitert.

Vorzugsweise ist die Abrisskante in einem Bereich zwischen 1/4 und 3/4 der Länge von Eintrittsquerschnitt in den Ablösungsbereich und Austrittsquerschnitt aus dem Ablösungsbereich angeordnet. Insbesondere bevorzugt ist die Abrisskante in der Nähe der Mitte des Ablösungsbereichs angeordnet. Diese Anordnung der Abrisskante ermöglicht ein gutes und kontrolliertes Abreißen des Luftstrahls an der Abrisskante im Spotbetrieb, d.h. wenn der Drallerzeugungsbereich im Wesentlichen gerade und ohne Drallbeaufschlagung durchströmt wird, wobei sich durch die Komfortdüse ein Luftstrahl mit einer großen Eindringtiefe in den Fahrzeuginnenraum ausbildet. Die Abrisskante verhindert hierbei eine fluktuierende oder rotierende Ablösung im Diffusor, was Vorteile in Bezug auf die Akustik bietet, d.h. es können unerwünschte Geräuschentwicklungen vermieden werden.

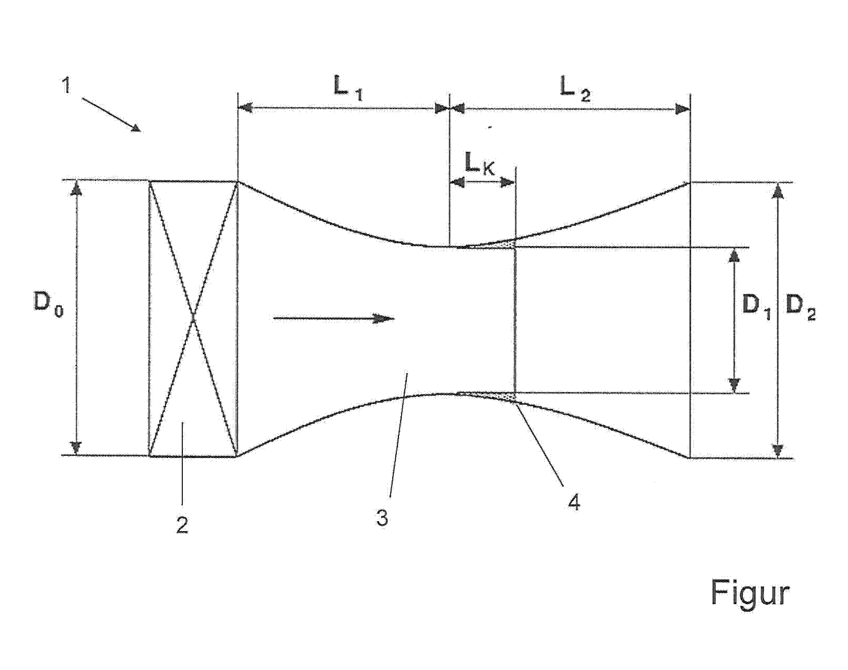

Im Folgenden wird die Erfindung anhand eines Ausführungsbeispiels unter Bezugnahme auf die Zeichnung im Einzelnen erläutert. Die einzige Figur der Zeichnung zeigt eine schematische Darstellung eines Längsschnitts durch die Komfortdüse 1 gemäß dem Ausführungsbeispiel.

Die Komfortdüse 1 ist vorliegend im Wesentlichen rotationssymmetrisch, d.h. mit kreisförmigem Querschnitt, ausgebildet. Hierbei weist sie in Längsrichtung der Düse betrachtet, einen ersten Bereich auf, im Folgenden auf Grund seiner Funktion als Drallerzeugungsbereich 2 bezeichnet, und einen zweiten Bereich, im Folgenden als Ablösungsbereich 3 bezeichnet, auf.

Im Drallerzeugungsbereich 2 ist vorliegend eine Mehrzahl von um radial verlaufende Schwenkachsen verschwenkbare Leitflächen angeordnet, welche stufenlos zwischen einer Stellung, in welcher die Leitflächen parallel zur Längsachse der Komfortdüse 1 angeordnet sind, und der maximal geneigten Stellung verstellbar sind. Durch die Leitflächen ergibt sich im Falle einer geschwenkten Stellung eine Drallbehaftung des die Komfortdüse 1 durchströmenden Luftstroms, wobei die Drallbehaftung um so größer ist, je weiter die Leitflächen gegenüber der Längsrichtung der Komfortdüse 1 verschwenkt sind. Der Luftkanal ist hierbei im Drallerzeugungsbereich 2 lediglich durch die Leitflächen unterteilt, d.h. es erfolgt keine Aufteilung des Luftstroms in einen durch einen Drallerzeugungsbereich führenden Teilluftkanal und einen in der Regel zentralen, einen Spotstrahl erzeugenden Teilluftkanal, sondern der gesamte Luftstrom durchströmt den Drallerzeugungsbereich, wie beispielsweise in der DE 10 2006 050 999 A1 vorgeschlagen.

Nachfolgend dem Drallerzeugungsbereich 2 ist besagter Ablösungsbereich 3 angeordnet, welcher in der Figur schematisch dargestellt ist, um die einzelnen Abmessungsparameter zu verdeutlichen.

Hierbei bezeichnet D0 den Innendurchmesser im beziehungsweise am Ende des Drallerzeugungsbereichs 2, D1 den Innendurchmesser im engsten Querschnitt und D2 den Innendurchmesser im Austrittsquerschnitt. L1 bezeichnet die Länge vom Ende des Drallerzeugungsbereich 2 bis zum Querschnitt mit dem kleinsten Innendurchmesser D1, L2 bezeichnet die Länge vom Querschnitt mit dem kleinsten Innendurchmesser D1 bis zum Austrittsquerschnitt und LK bezeichnet die Länge vom Querschnitt mit dem kleinsten Innendurchmesser D1 bis zu einer Abrisskante 4.

Der kleinste Querschnitt, d.h. der Querschnitt mit dem Innendurchmesser D1, bestimmt hierbei das gewünschte Geschwindigkeitsprofil eines Spotstrahls und damit auch die Eindringtiefe des gerichteten Luftstrahles in den Fahrzeuginnenraum. Der Eintrittsdurchmesser in den Ablösurfgsbereich 3, d.h. der Innendurchmesser D0 am Ende des Drallerzeugungsbereichs 2, ist in der Regel durch den Bauraum vorgegeben. Der Innendurchmesser D2 im Austrittsquerschnitt ist größer als der Innendurchmesser D1. Die Länge der Komfortdüse 1 ist durch die Länge des Drallerzeugungsbereichs 2 und die Längen L1 und L2 bestimmt. Um eine möglichst kurze Baulänge zu erreichen, ist bevorzugt L1 ungefähr D0-D1. Starke Konturkrümmungen in diesem Bereich sind auf Grund der beschleunigten Luftströmung in der Regel unkritisch. Die Kontur ist vorliegend ellipsenförmig.

### Bezugszeichenliste

1 Komfortdüse
2 Drallerzeugungsbereich
3 Ablösungsbereich
4 Abrisskante

## Patentansprüche

1. Komfortdüse mit einstellbarer Luftstrahlaufweitung, aufweisend einen Drallerzeugungsbereich (2), **dadurch gekennzeichnet, dass** dem Drallerzeugungsbereich (2) nachfolgend angeordnet ein konvergentdivergenter Ablösungsbereich (3) mit einer Abrisskante (4) angeordnet ist, wobei die Abrisskante (4) beabstandet vom Austrittsquerschnitt der Komfortdüse (1) ist und wobei die Abrisskante sich im divergenten Teil des Ablösungsbereich befindet.

2. Komfortdüse nach Anspruch 1, **dadurch gekennzeichnet, dass** die Abrisskante (4) in einer Ebene, die senkrecht zur Mittellängsachse der Komfortdüse (1) ist, umlaufend angeordnet ist.

3. Komfortdüse nach Anspruch 1 oder 2, **dadurch gekennzeichnet, dass** die Abrisskante (4) bei einem Längsschnitt durch die Komfortdüse (1) einen rechten Winkel aufweist.

4. Komfortdüse nach einem der vorhergehenden Ansprüche, **dadurch gekennzeichnet, dass** ein hohlzylindrischer Bereich mit einem minimalen Innendurchmesser (D1) vor der Abrisskante (4) angeordnet ist.

5. Komfortdüse nach einem der vorhergehenden Ansprüche, **dadurch gekennzeichnet, dass** sich der Innendurchmesser der Komfortdüse (1) in einem Bereich ausgehend vom Drallerzeugungsbereich (2) bis zu einem Bereich mit minimalem Innendurchmesser (D1) kreis-, ellipsen- oder hyperbelsegmentartig verringert.

6. Komfortdüse nach einem der vorhergehenden Ansprüche, **dadurch gekennzeichnet, dass** der Innendurchmesser der Komfortdüse (1) in einem Bereich ausgehend vom Bereich mit minimalem Innendurchmesser (D1) zuerst konstant ist, und in normaler Luftströmungsrichtung der Komfortdüse (1) sich anschließend nach einer eine Abrisskante (4) bildenden Stufe vergrößert.

7. Komfortdüse nach Anspruch 6, **dadurch gekennzeichnet, dass** sich der Innendurchmesser nach der Stufe linear, kreis-, ellipsen- oder hyperbelsegmentartig vergrößert.

8. Komfortdüse nach einem der vorhergehenden Ansprüche, **dadurch gekennzeichnet, dass** der Eintritts-Innendurchmesser (D0) dem Austrittsquerschnitt-Innendurchmesser des Drallerzeugungsbereichs (2) entspricht.

9. Komfortdüse nach einem der vorhergehenden Ansprüche, **dadurch gekennzeichnet, dass** die Länge (L1) vom Eintrittsquerschnitt bis zum Querschnitt mit dem kleinsten Innendurchmesser (D1) gleich der Differenz des Eintritts-Innendurchmessers (D0) und des kleinsten Innendurchmessers (D1) ist, oder in einem Bereich der Differenz +/- 30% der Differenz, insbesondere +/-15% der Differenz, liegt.

10. Komfortdüse nach einem der vorhergehenden Ansprüche, **dadurch gekennzeichnet, dass** der Innendurchmesser (D2) im Austrittsquerschnitt größer als der kleinste Innendurchmesser (D1) ist.

11. Komfortdüse nach einem der vorhergehenden Ansprüche, **dadurch gekennzeichnet, dass** der Innendurchmesser (D0) im Eintrittsquerschnitt gleich dem Innendurchmesser (D2) im Austrittsquerschnitt ist.

12. Komfortdüse nach einem der vorhergehenden Ansprüche, **dadurch gekennzeichnet, dass** die Abrisskante (4) eine Stufe bildet, welche den kleinsten Innendurchmesser (D1) um mindestens 2%, insbesondere um mindestens 5%, insbesondere um mindestens 10%, erweitert.

13. Komfortdüse nach einem der vorhergehenden Ansprüche, **dadurch gekennzeichnet, dass** die Abrisskante (4) in einem Bereich zwischen 1/4 und 3/4 der Länge von Eintrittsquerschnitt in den Ablösungsbereich (3) und Austrittsquerschnitt aus dem Ablösungsbereich (3) angeordnet ist.

14. Komfortdüse nach Anspruch 13, **dadurch gekennzeichnet, dass** die Abrisskante (4) in der Nähe der Mitte des Ablösungsbereichs (3) angeordnet ist.

## Claims

1. A comfort nozzle with adjustable air jet width, comprising a swirl generating region (2), **characterized in that** a convergent-divergent separation region (3) having a stall edge (4) is arranged downstream of the swir1 generating region (2), wherein the stall edgy (4) is spaced from the outlet cross-section of the comfort nozzle (1), and wherein the stall edge is located in the divergent section of the separation region.

2. The comfort nozzle according to claim 1, **characterized in that** the stall edge (4) is arranged peripherally in a plane that is perpendicular to the center longitudinal axis of the comfort nozzle (1).

3. The comfort nozzle according to claim 1 or 2, **characterized in that** the stall edge (4) has a right angle in a longitudinal sectional view through the comfort nozzle (1).

4. A comfort nozzle according to any one of the preceding claims, **characterized in that** a hollow-cylindrical region having a minimal inside diameter (D1) is arranged in front of the stall edge (4).

5. A comfort nozzle according to any one of the preceding claims, **characterized in that** the inside diameter of the comfort nozzle (1) degreases in the shape of a segment of a circle, segment of an ellipse or segment of a hyperbola in a region starting from the swirl generating region (2) to a region having a minimal inside diameter (D1).

6. A comfort nozzle according to any one of the preceding claims, **characterized in that** the inside diameter of the comfort nozzle (1) is first constant in a region starting from the region having the minimal inside diameter (D1), and subsequently, following a stage that forms a stall edge (4), increases in the normal air flow direction of the comfort nozzle (1).

7. The comfort nozzle according to claim 6, **characterized in that**, following the stage, the inside diameter increases in a linear shape or in the shape of a segment of a circle, segment of an ellipse or segment of a hyperbola.

8. A comfort nozzle according to any one of the preceding claims, **characterized in that** the inlet inside diameter (D0) corresponds to the outlet cross-section inside diameter of the swir1 generating region (2).

9. A comfort nozzle according to any one of the preceding claims, **characterized in that** the length (L1) from the inlet cross-section to the cross-section having the smallest inside diameter (D1) is equal to the difference between the inlet inside diameter (D0) and the smallest inside diameter (D1), or is in a range of the difference +/- 30% of the difference, in particular +/- 15% of the difference.

10. A comfort nozzle according to any one of the preceding claims, **characterized in that** the inside diameter (D2) in the outlet cross-section is larger than the smallest inside diameter (D1).

11. A comfort nozzle according to any one of the preceding claims, **characterized in that** the inside diameter (D0) in the inlet cross-section is equal to the inside diameter (D2) in the outlet cross-section.

12. A comfort nozzle according to any one of the preceding claims, **characterized in that** the stall edge (4) forms a stage that widens the smallest inside diameter (D1) by at least 2%, in particular by at least 5%, and more particularly by at least 10%.

13. A comfort nozzle according to any one of the preceding claims, **characterized in that** the stall edge (4) is arranged in a range between 1/4 and 3/4 of the length of the inlet cross-section into the separation region (3) and outlet cross-section out of the separation region (3).

14. The comfort nozzle according to claim 13, **characterized in that** the stall edge (4) is arranged in the vicinity of the center of the separation region (3).

## Revendications

1. Buse de confort comportant un élargissement réglable du jet d'air et présentant une zone de production de tourbillons (2),
**caractérisée en ce qu'**une zone de séparation (3) convergente / divergente, disposée en aval de la zone de production de tourbillons (2), est disposée en ayant une arrête de rupture (4), où l'arête de rupture (4) est espacée de la section de sortie de la buse de confort (1) et où l'arête de rupture se trouve dans la partie divergente de la zone de séparation.

2. Buse de confort selon la revendication 1, **caractérisée en ce que** l'arête de rupture (4) est disposée de façon circulaire, dans un plan qui est perpendiculaire à l'axe longitudinal médian de la buse de confort (1).

3. Buse de confort selon la revendication 1 ou 2, **caractérisée en ce que** l'arête de rupture (4) présente un angle droit, dans le cas d'une coupe longitudinale à travers la buse de confort (1).

4. Buse de confort selon l'une quelconque des revendications précédentes, **caractérisée en ce qu'**une zone cylindrique creuse ayant un diamètre intérieur minimum (D1) est disposée en amont de l'arête de rupture (4).

5. Buse de confort selon l'une quelconque des revendications précédentes, **caractérisée en ce que** le diamètre intérieur de la buse de confort (1), dans une zone partant de la zone de production de tourbillons (2) jusqu'à une zone ayant un diamètre intérieur minimum (D1), diminue à la manière d'un segment en forme de cercle, d'ellipse ou d'hyperbole.

6. Buse de confort selon l'une quelconque des revendications précédentes, **caractérisée en ce que** le diamètre intérieur de la buse de confort (1) est d'abord constant dans une zone partant de la zone ayant un diamètre intérieur minimum (D1) et, dans une direction normale d'écoulement d'air de la buse de confort (1), augmente en faisant suite, en aval, à un étage formant une arrête de rupture (4).

7. Buse de confort selon la revendication 6, **caractérisée en ce que** le diamètre intérieur, en aval de l'étage, augmente à la manière d'un segment de forme linéaire, en forme de cercle, d'ellipse ou d'hyperbole.

8. Buse de confort selon l'une quelconque des revendications précédentes, **caractérisée en ce que** le diamètre intérieur d'entrée (D0) correspond au diamètre intérieur de la section de sortie de la zone de production de tourbillons (2).

9. Buse de confort selon l'une quelconque des revendications précédentes, **caractérisée en ce que** la longueur (L1), à partir de la section d'entrée jusqu'à la section ayant le plus petit diamètre intérieur (D1), est égale à la différence entre le diamètre intérieur d'entrée (D0) et le plus petit diamètre intérieur (D1), ou bien se situe dans une zone de +/- 30 % par rapport à la différence, en particulier de +/- 15 % par rapport à la différence.

10. Buse de confort selon l'une quelconque des revendications précédentes, **caractérisée en ce que** le diamètre intérieur (D2), dans la section de sortie, est plus grand que le plus petit diamètre intérieur (D1).

11. Buse de confort selon l'une quelconque des revendications précédentes, **caractérisée en ce que** le diamètre intérieur (D0), dans la section d'entrée, est égal au diamètre intérieur (D2) dans la section de sortie.

12. Buse de confort selon l'une quelconque des revendications précédentes, **caractérisée en ce que** l'arête de rupture (4) forme un étage qui élargit le plus petit diamètre intérieur (D1) d'au moins 2 %, en particulier d'au moins 5 %, en particulier d'au moins 10 %.

13. Buse de confort selon l'une quelconque des revendications précédentes, **caractérisée en ce que** l'arête de rupture (4) est disposée dans une zone comprise entre le 1/4 et les 3/4 de la longueur de section d'entrée dans la zone de séparation (3), et de section de sortie à la sortie de la zone de séparation (3).

14. Buse de confort selon la revendication 13, **caractérisée en ce que** l'arête de rupture (4) est disposée à proximité du milieu de la zone de séparation (3).
